# EUROPEAN PATENT SPECIFICATION

(11) **EP 4 331 451 B1**
(45) Date of publication and mention of the grant of the patent: **18.09.2024**
(21) Application number: 22202565.2
(22) Date of filing: 19.10.2022
(51) Int. Cl.: A47J 43/044, A47J 43/07

(54) **ELECTRIC FROTHING DEVICE**
ELEKTRISCHE AUFSCHÄUMVORRICHTUNG
DISPOSITIF DE MOUSSAGE ÉLECTRIQUE

(30) Priority: 05.09.2022 TW 111209664 U
(43) Date of publication of application: 06.03.2024
(73) Proprietor: Kitchen Mama LLC, Wilmington, DE 19801 (US)
(72) Inventor: CHUANG, Shih-Chuan, Wilmington, DE 19801 (US); YAO, Ching-Hsiu, Wilmington, DE 19801 (US); LIU, Mao-Xi, Wilmington, DE 19801 (US)
(74) Representative: Straus, Alexander

(56) References cited:
- CN-A- 113 475 956
- CN-U- 211 484 207

## Description

### BACKGROUND OF THE INVENTION

### 1. Field of the Invention

The present invention relates to frothing devices and more particularly, to an electric frothing device which can produce milk froth.

### 2. Description of the Related Art

Milk froth can make coffee have smooth and full mouthfeel, which is one of the indispensable important elements of coffee. The creamy and dense extent of the milk froth affects the mouthfeel of a cup of coffee, and whether the pattern of latte art is liable to maintain. Therefore, the use of a milk frothing machine is required for producing creamy dense milk froth. At present, the commercially available milk frothing machines can be divided according to the drive manners thereof into two types, which are electric and manual types. The electric milk frothing machines can be further divided into two types, which are 'electric stirring rod' and 'electric milk frother'. The suitable product can be chosen according to the user's own requirement. CN 113475956 A discloses a milk foam making device comprising a shell, a stirring module comprising a stirring rod, the stirring rod is provided with a through channel having an air inlet and an air outlet; a steam generation module installed on the shell and used for generating steam. The air inlet is used for receiving the steam generated by the steam generation module. The air outlet is used for outputting the steam to the outside of the stirring module.

Wherein, the electric stirring rod generally includes a driving unit, a connecting rod, a fan, and a sieve disposed with an interval from the fan. When the driving unit of the electric stirring rod is switched on, the driving unit drives the fan to rotate, and creamy dense milk froth is produced by the sieve disposed in front of the fan. However, after the electric stirring rod finishes producing the milk froth, a part of the milk froth will remain on the sieve and uneasy to drop. Besides, the milk froth remaining on the sieve makes it uneasy to clean the sieve well. When the electric stirring rod is used once again by the user to produce milk froth, the sieve not cleaned well will bring hygienic doubt. Therefore, the presently available electric stirring rods still need improvement.

### SUMMARY OF THE INVENTION

The present invention has been accomplished in view of the above-noted circumstances. It is a primary objective of the present invention to provide an electric frothing device which makes milk froth easy to drop from the electric frothing device and makes it easy to clean the milk froth remaining on the electric frothing device well.

To attain the above objective, the present invention provides an electric frothing device which includes a driving unit, a connecting rod, and a frothing unit. The driving unit has a housing, and a drive motor disposed in the housing. The drive motor has a power outputting shaft. The connecting rod is fixed to the power outputting shaft of the drive motor. The frothing unit has a fan fixed to the connecting rod and having blades, and a coil spring disposed with an interval from the blades of the fan.

By the aforementioned technical feature of the coil spring disposed with an interval from the blades of the fan, the milk froth remaining on the coil spring is easy to drop from the coil spring. Besides, the coil spring is quite simple in structure, thereby easier to clean well than the sieve.

The fan furthermore has an annular body portion, and the blades disposed in the annular body portion at intervals; the annular body portion has a top and a bottom, and the bottom has two positioning members disposed oppositely; two ends of the coil spring are detachably fixed to the positioning members of the fan respectively. In this way, if there is milk froth sticking to the coil spring and thereby having to be cleaned specially, or the coil spring is damaged and thereby requires replacement, two ends of the coil spring can be easily detached from the positioning members of the fan.

Preferably, the frothing unit includes a fixing ring detachably sleeved and fixed to the bottom of the annular body portion and covering the positioning members and the two ends of the coil spring. In this way, the fixing ring can effectively make the positioning members and two ends of the coil spring fixed, thereby making the coil spring disposed between the annular body portion of the fan and the fixing ring.

Preferably, each of the positioning members has a rod-shaped body portion and a head portion connected with the rod-shaped body portion; the two ends of the coil spring are each formed with a fixing loop; the fixing loops are sleeved onto the rod-shaped body portions of the positioning members respectively; the fixing ring has a top and a bottom; the top of the fixing ring has two positioning holes disposed oppositely; the head portions of the positioning members are inserted in the positioning holes of the fixing ring respectively. In this way, by the fixing loops of the coil spring being sleeved onto the rod-shaped body portions of the positioning members, the coil spring can be steadily disposed on the annular body portion of the fan. By the positioning members being inserted in the positioning holes of the fixing ring, the fixing ring can be fixed to the fan, so that the fixing ring can cover the fixing loops of two ends of the coil spring completely and can be easily detached from the bottom of the annular body portion.

Preferably, the bottom of the annular body portion of the fan has an annular positioning groove, and the top of the fixing ring has an annular positioning flange; the annular positioning flange is embedded in the annular positioning groove. In this way, the bottom of the annular body portion of the fan can be relatively more closely fit to the top of the fixing ring.

Preferably, the bottom of the annular body portion of the fan has two protruding lugs disposed oppositely; each of the protruding lugs is provided with one of the positioning members and an embedding portion located at the annular positioning groove; the top of the fixing ring has two protruding lugs disposed oppositely, and embedding breaches corresponding to the protruding lugs of the fixing ring respectively; the embedding portions are embedded in the embedding breaches respectively. In this way, the bottom of the annular body portion of the fan can be relatively more closely fit to the top of the fixing ring.

Preferably, the fan further has a central axle provided with an axial hole; an inner end of each of the blades is fixed to the central axle, and an outer end of each of the blades is fixed to the annular body portion of the fan. In this way, the blades of the fan can stably rotate about the axis of the central axle.

Preferably, the axial hole of the central axle has two locking blocks disposed oppositely; an end of the connecting rod has two locking recesses; each of the locking recesses has a small path portion and a large path portion communicating with the small path portion; the locking blocks are respectively disposed into the locking recesses through the small path portions and embedded in the large path portions of the locking recesses. In this way, the connecting rod can be steadily fixed to the central axle of the fan, and can be easily detached.

Preferably, the connecting rod includes a tube, a first rod member combined with an end of the tube in a sleeved manner, and a second rod member combined with another end of the tube in a sleeved manner; the first rod member is fixed to the power outputting shaft of the drive motor; the second rod member is fixed to the central axle of the fan. In this way, the connecting rod can be easily assembled or disassembled.

Further scope of applicability of the present invention will become apparent from the detailed description given hereinafter. However, it should be understood that the detailed description and specific examples, while indicating preferred embodiments of the invention, are given by way of illustration only, since various changes and modifications will become apparent to those skilled in the art from this detailed description.

### BRIEF DESCRIPTION OF THE DRAWINGS

The electric frothing device provided by the present invention will be further described by the embodiment given herein below and the accompanying drawings, and wherein:
FIG. 1 is an assembled perspective view of an electric frothing device of a preferred embodiment of the present invention;
FIG. 2 is a top view of the electric frothing device of the preferred embodiment of the present invention;
FIG. 3 is an exploded perspective view of the electric frothing device of the preferred embodiment of the present invention;
FIG. 4 is an exploded perspective view of partial components of the electric frothing device of the preferred embodiment of the present invention, showing a second rod member and each component of a frothing unit; and
FIG. 5 is an exploded perspective view of another angle of the partial components of the electric frothing device of the preferred embodiment of the present invention, showing the second rod member and each component of the frothing unit.

### DETAILED DESCRIPTION OF THE INVENTION

First of all, it is to be mentioned that the technical features provided by the present invention are unlimited to the specific structure, usage and application thereof described in the detailed description of the invention. It should be understood by those skilled in the related art that all the terms used in the contents of the specification are for illustrative description. The directional terms mentioned in the specification, such as `front, upper, lower, rear, left, right, top, bottom, inner and outer', are also just for illustrative description on the basis of normal usage direction, not intended to limit the claimed scope.

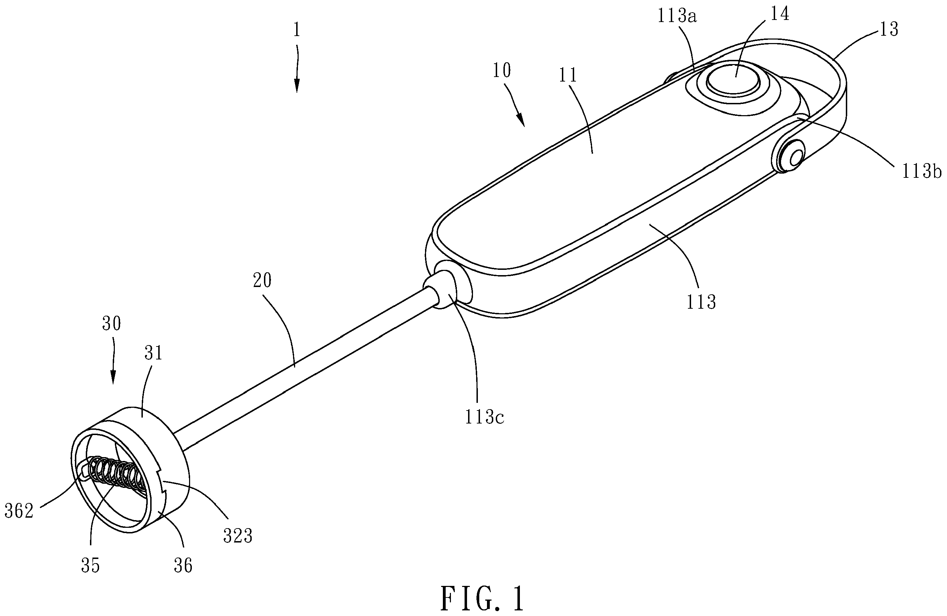

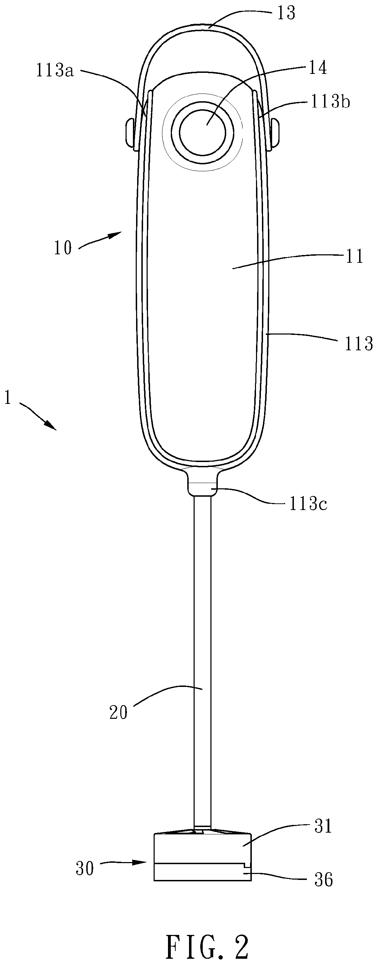

Referring to FIG. 1 to FIG. 3, an electric frothing device 1 provided by a preferred embodiment of the present invention is primarily composed of a driving unit 10, a connecting rod 20 and a frothing unit 30.

The driving unit 10 is primarily composed of a housing 11, a drive motor 12 disposed in the housing 11, a hanging lug 13, a switch 14, and an electric power source 15 electrically connected with the drive motor 12. Specifically speaking, the housing 11 has a base 110, a first covering plate 111 fitted on the base 110, a second covering plate 112 fitted on the first covering plate 111, and an outer reinforcing plate 113 fixed to the base 110. The outer reinforcing plate 113 has a first end portion 113a and a second end portion 113b, and a protruding portion 113c located between the first and second end portions 113a and 113b. The drive motor 12 has a power outputting shaft 120. The power outputting shaft 120 is inserted through the protruding portion 113c of the outer reinforcing plate 113, so that a part of the power outputting shaft 120 is exposed out of the housing 11. Two ends of the hanging lug 13 are fixed to the first and second end portions 113a and 113b of the outer reinforcing plate 113 respectively. The switch 14 is disposed on a bottom surface of the base 110. The electric power source 15 is placed between the first covering plate 111 and the second covering plate 112 for driving the power outputting shaft 120 of the drive motor 12 to rotate.

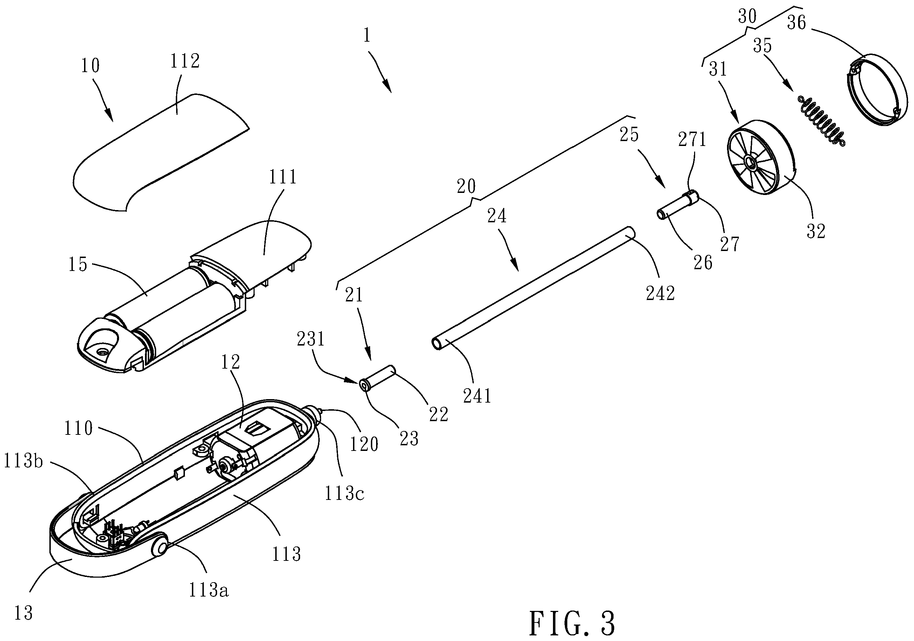

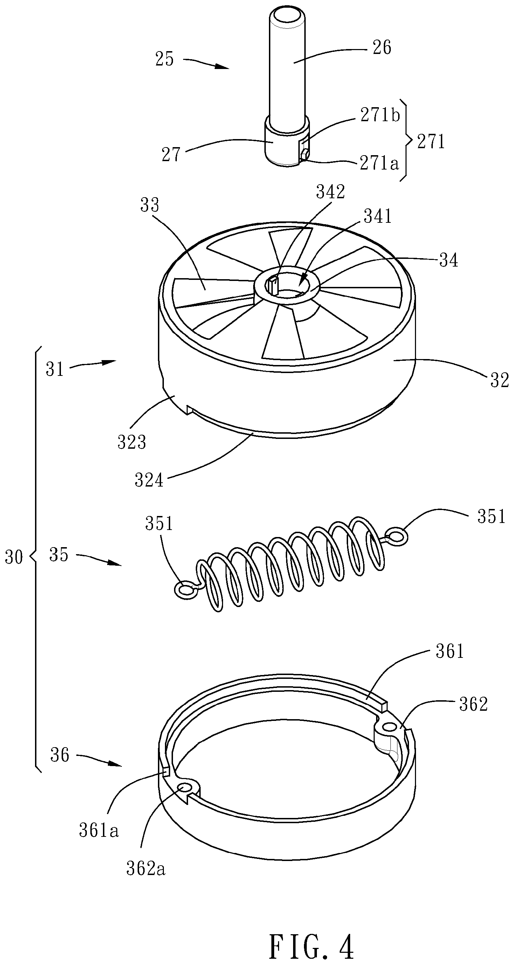

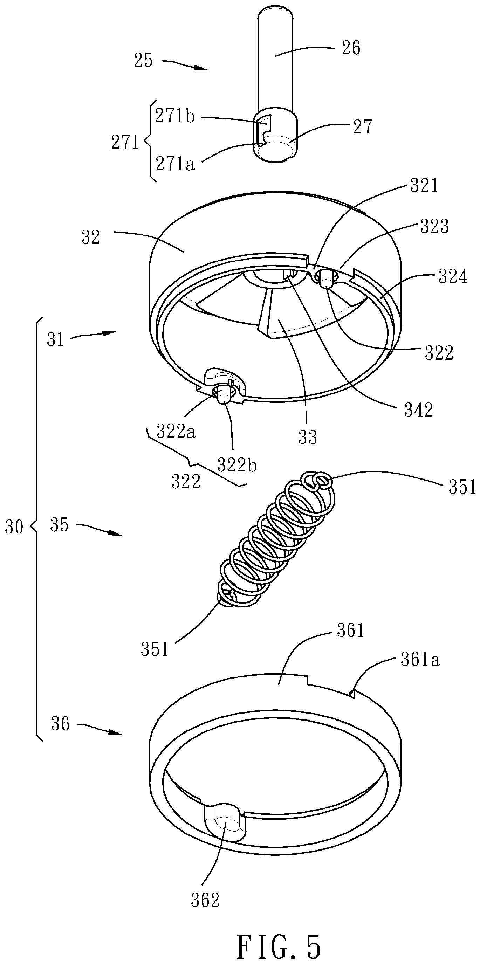

Referring to FIG. 3 to FIG. 5, the connecting rod 20 has a first rod member 21, a tube 24, and a second rod member 25. Specifically speaking, the first rod member 21 has a rod-shaped body portion 22 and a head portion 23 communicating with the rod-shaped body portion 22. The tube 24 has a first end 241 and a second end 242. The second rod member 25 has a rod-shaped body portion 26 and a head portion 27 communicating with the rod-shaped body portion 26. The first end 241 of the tube 24 is sleeved onto the rod-shaped body portion 22 of the first rod member 21. The second end 242 of the tube 24 is sleeved onto the rod-shaped body portion 26 of the second rod member 25. Besides, the head portion 23 of the first rod member 21 has a fixedly connecting hole 231. The fixedly connecting hole 231 of the first rod member 21 is sleeved and fixed to the power outputting shaft 120 of the drive motor 12. The head portion 27 of the second rod member 25 has two locking recesses 271 corresponding to each other. Each of the locking recesses 271 has a small path portion 271a and a large path portion 271b communicating with the small path portion 271a. The small path portion 271a extends from the bottom end of the head portion 27 of the second rod member 25 inwardly along the axial direction. The large path portion 271b is located on the outer peripheral surface of the head portion 27 of the second rod member 25 and extends chordwise to perpendicularly communicate with the top end of the small path portion 271a.

The frothing unit 30 is primarily composed of a fan 31, a coil spring 35, and a fixing ring 36. Specifically speaking, the fan 31 has an annular body portion 32, a plurality of blades 33 disposed in the annular body portion 32 at intervals, and a central axle 34. An inner end of each blade 33 of the fan 31 is fixed to the central axle 34. An outer end of each blade 33 of the fan 31 is fixed to the annular body portion 32. Besides, a bottom of the annular body portion 32 has two protruding lugs 321 disposed oppositely, and an annular positioning groove 324. Each protruding lug 321 is provided with a positioning member 322, and an embedding portion 323 located at the annular positioning groove 324. Each positioning member 322 has a rod-shaped body portion 322a and a head portion 322b connected with the rod-shaped body portion 322a. It is to be mentioned that the central axle 34 has an axial hole 341, and two locking blocks 342 disposed oppositely in the axial hole 341 and extending along the axial direction of the axial hole 341. In this way, during the combining of the second rod member 25 with the fan 31, the locking blocks 342 of the central axle 34 can respectively slide through the small path portions 271a of the locking recesses 271 of the second rod member 25 into the large path portions 271b, and then the second rod member 25 is rotated to make the locking blocks 342 embedded in the large path portions 271b of the locking recesses 271 and thereby prevented from coming off. In this way, the second rod member 25 is fixed to the fan 31, and when it is to be detached for clean, the second rod member 25 can be separated from the fan 31 by the reverse operation of the above-described process.

The coil spring 35 is disposed with an interval from the blades 33 of the fan 31. Specifically speaking, two ends of the coil spring 35 are each formed with a fixing loop 351. The fixing loops 351 are sleeved onto the rod-shaped body portions 322a of the positioning members 322 respectively, so that two ends of the coil spring 35 are detachably fixed to the positioning members 322 of the fan 31 respectively and located below the blades 33.

The fixing ring 36 is sleeved and fixed to the bottom of the annular body portion 32 of the fan 31 to cover the positioning members 322 and two ends of the coil spring 35. Specifically speaking, a top of the fixing ring 36 has an annular positioning flange 361 and two protruding lugs 362 disposed oppositely. Besides, the annular positioning flange 361 has two embedding breaches 361a disposed separately, and the embedding breaches 361a correspond to the protruding lugs 362 respectively. Each protruding lug 362 is provided with a positioning hole 362a. When the fan 31 is combined with the fixing ring 36, the annular positioning flange 361 is embedded in the annular positioning groove 324, and the embedding portions 323 are embedded in the embedding breaches 361a respectively, so that the head portions 322b of the positioning members 322 can be inserted in the positioning holes 362a respectively, making the fan 31 and the fixing ring 36 tightly and closely fixed and clamping the coil spring 35 between the fan 31 and the fixing ring 36 steadily.

The structural features of the electric frothing device 1 provided by the preferred embodiment of the present invention are described above. The usage manner and effects of the electric frothing device 1 will be further described hereinunder. It can be known from the above description that the first rod member 21 of the connecting rod 20 is fixed to the power outputting shaft 120 of the drive motor 12 by the fixedly connecting hole 231, and the second rod member 25 of the connecting rod 20 is fixed to the fan 31 by the locking recesses 271. Therefore, through the connection of the connecting rod 20, the power outputting shaft 120 of the drive motor 12 can drive the fan 31 to rotate.

When producing milk froth, the user firstly puts the electric frothing device 1 into a cup of milk (not shown), and uses a hand to press and release the switch 14 of the driving unit 10 for frothing the milk into milk froth. Specifically speaking, when the switch 14 is pressed, the electric power source 15 supplies electric power to drive the power outputting shaft 120 of the drive motor 12 to rotate the fan 31, and the rotated frothing unit 30 can pump a lot of air into the milk to froth the milk. When the switch 14 is released, the electric power source 15 is cut off, so the power outputting shaft 120 of the drive motor 12 stops rotating, thereby stopping the rotation of the fan 31. Therefore, by the actions of pressing and releasing the switch 14, the user can make the power outputting shaft 120 of the drive motor 12 drive the fan 31 to rotate intermittently and stop it, and the time and frequency of pressing and releasing the switch 14 can be even self-decided by the user according to the requirement thereof.

In conclusion, when the electric frothing device 1 provided by the present invention is used for producing milk froth, the milk froth is easy to drop from the coil spring 35, and the configuration design that the coil spring 35 is detachably fixed between the fan 31 and the fixing ring 36 is beneficial for the cleaning of the milk froth remaining on the coil spring 35. Besides, the electric frothing device 1 is unlimited to the usage of frothing milk, but may be used in other frothable drinks for adding flavor of the drinks.

The invention being thus described, it will be obvious that the same may be varied in many ways. The scope of what protection is sought for shall be defined by the following claims.

## Claims

1. An electric frothing device (1) comprising:
a driving unit (10) having a housing (11) and a drive motor (12) disposed in the housing (11), the drive motor (12) having a power outputting shaft (120);
a connecting rod (20) fixed to the power outputting shaft (120) of the drive motor (12); and
a coil spring (35);
**characterized in that** the frothing device further comprises:
a frothing unit (30) having a fan (31) fixed to the connecting rod (20) and having a plurality of blades (33), the coil spring (35) being disposed with an interval from the blades (33) of the fan (31), wherein the fan (31) has an annular body portion (32), and the blades (33) disposed in the annular body portion (32) at intervals, the annular body portion (32) has a top and a bottom, and the bottom has two positioning members (322) disposed oppositely, two ends of the coil spring (35) are detachably fixed to the positioning members (322) of the fan (31) respectively.

2. The electric frothing device (1) as claimed in claim 1, **characterized in that** the frothing unit (30) comprises a fixing ring (36) detachably sleeved and fixed to the bottom of the annular body portion (32) and covering the positioning members (322) and said two ends of the coil spring (35).

3. The electric frothing device (1) as claimed in claim 2, **characterized in that** each of the positioning members (322) has a rod-shaped body portion (322a) and a head portion (322b) connected with the rod-shaped body portion (322a); said two ends of the coil spring (35) are each formed with a fixing loop (351); the fixing loops (351) are sleeved onto the rod-shaped body portions (332a) of the positioning members (322) respectively; the fixing ring (36) has a top and a bottom; the top of the fixing ring (36) has two positioning holes (362a) disposed oppositely; the head portions (322b) of the positioning members (322) are inserted in the positioning holes (362a) of the fixing ring (36) respectively.

4. The electric frothing device (1) as claimed in claim 3, **characterized in that** the bottom of the annular body portion (32) of the fan (31) has an annular positioning groove (324), and the top of the fixing ring (36) has an annular positioning flange (361); the annular positioning flange (361) is embedded in the annular positioning groove (324).

5. The electric frothing device (1) as claimed in claim 4, **characterized in that** the bottom of the annular body portion (32) of the fan (31) has two protruding lugs (321) disposed oppositely; each of the protruding lugs (321) is provided with a said positioning member (322) and an embedding portion (323) located at the annular positioning groove (324); the top of the fixing ring (36) has two protruding lugs (362) disposed oppositely, and embedding breaches (361a) corresponding to the protruding lugs (362) of the fixing ring (36) respectively; the embedding portions (323) are embedded in the embedding breaches (361a) respectively.

6. The electric frothing device (1) as claimed in claim 1, **characterized in that** the fan (31) further has a central axle (34) provided with an axial hole (341); an inner end of each of the blades (33) is fixed to the central axle (34), and an outer end of each of the blades (33) is fixed to the annular body portion (32) of the fan (31).

7. The electric frothing device (1) as claimed in claim 6, **characterized in that** the axial hole (341) of the central axle (34) has two locking blocks (342) disposed oppositely; an end of the connecting rod (20) has two locking recesses (271); each of the locking recesses (271) has a small path portion (271a) and a large path portion (271b) communicating with the small path portion (271a); the locking blocks (342) are respectively disposed into the locking recesses (271) through the small path portions (271a) and embedded in the large path portions (271b) of the locking recesses (271).

8. The electric frothing device (1) as claimed in claim 6, **characterized in that** the connecting rod (20) comprises a tube (24), a first rod member (21) combined with an end of the tube (24) in a sleeved manner, and a second rod member (25) combined with another end of the tube (24) in a sleeved manner; the first rod member (21) is fixed to the power outputting shaft (120) of the drive motor (12); the second rod member (25) is fixed to the central axle (34) of the fan (31).

9. The electric frothing device (1) as claimed in claim 8, **characterized in that** the axial hole (341) of the central axle (34) has two locking blocks (342) disposed oppositely; an end of the second rod member (25) has two locking recesses (271); each of the locking recesses (271) has a small path portion (271a) and a large path portion (271b) communicating with the small path portion (271a); the locking blocks (342) are respectively disposed into the locking recesses (271) through the small path portions (271) and embedded in the large path portions (271b) of the locking recesses (271).

## Patentansprüche

1. Elektrisches Aufschäumgerät (1), welches umfasst:
eine Antriebseinheit (10) mit einem Gehäuse (11) und einem in dem Gehäuse (11) angeordneten Antriebsmotor (12), worin der Antriebsmotor (12) eine Kraftabgabewelle (120) aufweist;
eine Verbindungsstange (20), die an der Kraftabgabewelle (120) des Antriebsmotors (12) befestigt ist; und
eine Spiralfeder (35);
**dadurch gekennzeichnet, dass** das Aufschäumgerät ferner umfasst:
eine Aufschäumeinheit (30) mit einem an der Verbindungsstange (20) befestigten Gebläse (31), das mehrere Schaufeln (33) aufweist, worin die Spiralfeder (35) mit einem Abstand von den Schaufeln (33) des Gebläses (31) angeordnet ist, worin das Gebläse (31) einen ringförmigen Körperabschnitt (32) aufweist, und die Schaufeln (33) in dem ringförmigen Körperabschnitt (32) in Abständen angeordnet sind, worin der ringförmige Körperabschnitt (32) eine Oberseite und eine Unterseite aufweist und die Unterseite zwei gegenüberliegend angeordnete Positionierungselemente (322) aufweist, worin zwei Enden der Spiralfeder (35) jeweils lösbar an den Positionierungselementen (322) des Gebläses (31) befestigt sind.

2. Elektrisches Aufschäumgerät (1) nach Anspruch 1, **dadurch gekennzeichnet, dass** die Aufschäumeinheit (30) einen Befestigungsring (36) umfasst, der abnehmbar mit einer Hülse versehen und am Boden des ringförmigen Körperabschnitts (32) befestigt ist und die Positionierungselemente (322) und die beiden Enden der Spiralfeder (35) abdeckt.

3. Elektrisches Aufschäumgerät (1) nach Anspruch 2, **dadurch gekennzeichnet, dass** jedes der Positionierungselemente (322) einen stangenförmigen Körperabschnitt (322a) und einen mit dem stangenförmigen Körperabschnitt (322a) verbundenen Kopfabschnitt (322b) aufweist; worin die beiden Enden der Spiralfeder (35) jeweils mit einer Befestigungsschlaufe (351) ausgebildet sind; die Befestigungsschlaufen (351) entsprechend auf die stabförmigen Körperabschnitte (332a) der Positionierungselemente (322) aufgeschoben sind; der Befestigungsring (36) eine Oberseite und eine Unterseite aufweist; die Oberseite des Befestigungsrings (36) zwei gegenüberliegend angeordnete Positionierungslöcher (362a) aufweist; die Kopfabschnitte (322b) der Positionierungselemente (322) jeweils in die Positionierungslöcher (362a) des Befestigungsrings (36) eingesetzt sind.

4. Elektrisches Aufschäumgerät (1) nach Anspruch 3, **dadurch gekennzeichnet, dass** der Boden des ringförmigen Körperabschnitts (32) des Gebläses (31) eine ringförmige Positionierungsnut (324) aufweist und die Oberseite des Befestigungsrings (36) einen ringförmigen Positionierungsflansch (361) aufweist; und darin dass der ringförmige Positionierungsflansch (361) in die ringförmige Positionierungsnut (324) eingebettet ist.

5. Elektrisches Aufschäumgerät (1) nach Anspruch 4, **dadurch gekennzeichnet, dass** die Unterseite des ringförmigen Körperabschnitts (32) des Gebläses (31) zwei gegenüberliegend angeordnete vorspringende Nasen (321) aufweist; jede der vorspringenden Nasen (321) mit einem der Positionierungselemente (322) und einem Einbettungsabschnitt (323) versehen ist, der sich in der ringförmigen Positionierungsnut (324) befindet; die Oberseite des Befestigungsrings (36) zwei gegenüberliegend angeordnete vorspringende Nasen (362) und Einbettungsaussparungen (361a) aufweist, die jeweils den vorspringenden Nasen (362) des Befestigungsrings (36) entsprechen; die Einbettungsabschnitte (323) jeweils in die Einbettungsaussparungen (361a) eingebettet sind.

6. Elektrisches Aufschäumgerät (1) nach Anspruch 1, **dadurch gekennzeichnet, dass** das Gebläse (31) ferner eine Zentralachse (34) aufweist, die mit einem axialen Loch (341) versehen ist; ein inneres Ende jeder der Schaufeln (33) an der Zentralachse (34) befestigt ist, und ein äußeres Ende jeder der Schaufeln (33) an dem ringförmigen Körperabschnitt (32) des Gebläses (31) befestigt ist.

7. Elektrisches Aufschäumgerät (1) nach Anspruch 6, **dadurch gekennzeichnet, dass** das axiale Loch (341) der Zentralachse (34) zwei gegenüberliegend angeordnete Verriegelungsblöcke (342) aufweist; ein Ende der Verbindungsstange (20) zwei Verriegelungsaussparungen (271) aufweist; jede der Verriegelungsaussparungen (271) einen kleinen Pfadabschnitt (271a) und einen großen Pfadabschnitt (271b) aufweist, der mit dem kleinen Pfadabschnitt (271a) in Verbindung steht; die Verriegelungsblöcke (342) jeweils durch die kleinen Pfadabschnitte (271a) in den Verriegelungsaussparungen (271) angeordnet und in den großen Pfadabschnitten (271b) der Verriegelungsaussparungen (271) eingebettet sind.

8. Elektrisches Aufschäumgerät (1) nach Anspruch 6, **dadurch gekennzeichnet, dass** die Verbindungsstange (20) ein Rohr (24), ein erstes Stangenelement (21), das mit einem Ende des Rohrs (24) in einer hülsenförmigen Weise kombiniert ist, und ein zweites Stangenelement (25) umfasst, das mit einem anderen Ende des Rohrs (24) in einer hülsenförmigen Weise kombiniert ist; worin das erste Stangenelement (21) an der Kraftabgabewelle (120) des Antriebsmotors (12) befestigt ist; und das zweite Stangenelement (25) an der Zentralachse (34) des Gebläses (31) befestigt ist.

9. Elektrisches Aufschäumgerät (1) nach Anspruch 8, **dadurch gekennzeichnet, dass** das axiale Loch (341) der Zentralachse (34) zwei gegenüberliegend angeordnete Verriegelungsblöcke (342) aufweist; ein Ende des zweiten Stangenelements (25) zwei Verriegelungsaussparungen (271) aufweist; jede der Verriegelungsaussparungen (271) einen kleinen Pfadabschnitt (271a) und einen großen Pfadabschnitt (271b) aufweist, der mit dem kleinen Pfadabschnitt (271a) in Verbindung steht; die Verriegelungsblöcke (342) jeweils durch die kleinen Pfadabschnitte (271) in den Verriegelungsaussparungen (271) angeordnet und in den großen Pfadabschnitten (271b) der Verriegelungsaussparungen (271) eingebettet sind.

## Revendications

1. Dispositif électrique de moussage (1) comprenant:
une unité d'entraînement (10) comportant un boîtier (11) et un moteur d'entraînement (12) disposé dans le boîtier (11), le moteur d'entraînement (12) comportant un arbre de sortie de puissance (120);
une bielle de raccordement (20) fixée à l'arbre de sortie (120) du moteur d'entraînement (12); et
un ressort hélicoïdal (35);
**caractérisé en ce que** le dispositif de moussage comprend en outre:
une unité de moussage (30) comportant un ventilateur (31) fixé à la bielle de raccordement (20) et comportant plusieurs pales (33), le ressort hélicoïdal (35) étant disposé à un intervalle des pales (33) du ventilateur (31), dans lequel le ventilateur (31) comporte une partie de corps annulaire (32), et les pales (33) disposées dans la partie de corps annulaire (32) à intervalles, la partie de corps annulaire (32) a un haut et un bas, et le bas a deux éléments de positionnement (322) disposés de manière opposée, deux extrémités du ressort hélicoïdal (35) sont fixées de manière amovible aux éléments de positionnement (322) du ventilateur (31) respectivement.

2. Dispositif électrique de moussage (1) selon la revendication 1, **caractérisé en ce que** l'unité de moussage (30) comprend un anneau de fixation (36) manchonné et fixé de manière amovible au bas de la partie de corps annulaire (32) et recouvrant les éléments de positionnement (322) et lesdites deux extrémités du ressort hélicoïdal (35).

3. Dispositif électrique de moussage (1) selon la revendication 2, **caractérisé en ce que** chacun des éléments de positionnement (322) a une partie de corps en forme de tige (322a) et une partie de tête (322b) reliée à la partie de corps en forme de tige (322a); lesdites deux extrémités du ressort hélicoïdal (35) sont chacune formées d'une boucle de fixation (351); les boucles de fixation (351) sont manchonnées sur les partie de corps en forme de tige (332a) des éléments de positionnement (322) respectivement; l'anneau de fixation (36) a un haut et un bas; le haut de l'anneau de fixation (36) a deux trous de positionnement (362a) disposés de manière opposée; les parties de tête (322b) des éléments de positionnement (322) sont insérées dans les trous de positionnement (362a) de l'anneau de fixation (36) respectivement.

4. Dispositif électrique de moussage (1) selon la revendication 3, **caractérisé en ce que** le bas de la partie de corps annulaire (32) du ventilateur (31) présente une rainure de positionnement annulaire (324), et le haut de l'anneau de fixation (36) présente une bride de positionnement annulaire (361); la bride de positionnement annulaire (361) est encastrée dans la rainure de positionnement annulaire (324).

5. Dispositif électrique de moussage (1) selon la revendication 4, **caractérisé en ce que** le bas de la partie de corps annulaire (32) du ventilateur (31) comporte deux pattes saillantes (321) disposées en opposition; chacune des pattes saillantes (321) est pourvue d'un élément de positionnement (322) et d'une partie d'encastrement (323) située au niveau de la rainure de positionnement annulaire (324); le haut de l'anneau de fixation (36) comporte deux pattes saillantes (362) disposées de manière opposée et des brèches d'encastrement (361a) correspondant respectivement aux pattes saillantes (362) de l'anneau de fixation (36); les parties d'encastrement (323) sont encastrées respectivement dans les brèches d'encastrement (361a).

6. Dispositif électrique de moussage (1) selon la revendication 1, **caractérisé en ce que** le ventilateur (31) comporte en outre un axe central (34) pourvu d'un trou axial (341); une extrémité intérieure de chacune des pales (33) est fixée à l'axe central (34), et une extrémité extérieure de chacune des pales (33) est fixée à la partie de corps annulaire (32) du ventilateur (31).

7. Dispositif électrique de moussage (1) selon la revendication 6, **caractérisé en ce que** le trou axial (341) de l'axe central (34) comporte deux blocs de verrouillage (342) disposés en opposition; une extrémité de la bielle de raccordement (20) comporte deux évidements de verrouillage (271); chacun des évidements de verrouillage (271) a une petite partie de chemin (271a) et une grande partie de chemin (271b) communiquant avec la petite partie de chemin (271a); les blocs de verrouillage (342) sont respectivement disposés dans les évidements de verrouillage (271) à travers les petites parties de chemin (271a) et encastrés dans les grandes parties de chemin (271b) des évidements de verrouillage (271).

8. Dispositif électrique de moussage (1) selon la revendication 6, **caractérisé en ce que** la bielle de raccordement (20) comprend un tube (24), un premier élément de bielle (21) combiné à une extrémité du tube (24) de manière manchonnée, et un deuxième élément de bielle (25) combiné à une autre extrémité du tube (24) de manière manchonnée; le premier élément de bielle (21) est fixé à l'arbre de sortie de puissance (120) du moteur d'entraînement (12); le deuxième élément de bielle (25) est fixé à l'axe central (34) du ventilateur (31).

9. Dispositif électrique de moussage (1) selon la revendication 8, **caractérisé en ce que** le trou axial (341) de l'axe central (34) comporte deux blocs de verrouillage (342) disposés en opposition; une extrémité du deuxième élément de tige (25) comporte deux évidements de verrouillage (271); chacun des évidements de verrouillage (271) a une petite partie de chemin (271a) et une grande partie de chemin (271b) communiquant avec la petite partie de chemin (271a); les blocs de verrouillage (342) sont respectivement disposés dans les évidements de verrouillage (271) à travers les petites parties de chemin (271) et encastrés dans les grandes parties de chemin (271b) des évidements de verrouillage (271).
